# EUROPÄISCHE PATENTSCHRIFT

(11) **EP 1 891 345 B1**
(45) Veröffentlichungstag und Bekanntmachung des Hinweises auf die Patenterteilung: **15.12.2010**
(21) Anmeldenummer: 06761664.9
(22) Anmeldetag: 16.06.2006
(51) Int. Cl.: F16C 11/06

(54) **KUGELGELENK**
BALL JOINT
ARTICULATION A ROTULE

(30) Priorität: 17.06.2005 DE 102005028515
(43) Veröffentlichungstag der Anmeldung: 27.02.2008
(73) Patentinhaber: ZF Friedrichshafen AG, 88038 Friedrichshafen (DE)
(72) Erfinder: BUHL, Manfred, 49143 Bissendorf (DE); KUNZE, Ralf, 49152 Bad Essen (DE)
(86) Internationale Anmeldenummer: PCT/DE2006/001036
(87) Internationale Veröffentlichungsnummer: WO 2006/133693

(56) Entgegenhaltungen:
- EP-A- 0 080 262
- DE-A1- 4 445 251
- DE-A1- 19 800 614
- FR-A1- 2 691 490
- US-A1- 2002 184 768
- US-B1- 6 343 889

## Beschreibung

Die Erfindung betrifft ein Kugelgelenk, beispielsweise für ein Achssystem oder eine Radaufhängung eines Kraftfahrzeuges.

Kugelgelenke der eingangs genannten Art kommen beispielsweise, jedoch keineswegs ausschließlich, am Fahrwerk bzw. im Bereich von Radaufhängung oder Lenkung von Kraftfahrzeugen - z.B. als Traggelenk oder als Führungsgelenk - zum Einsatz.

Kugelgelenke gemäß dem Stand der Technik weisen üblicherweise ein einteiliges Gehäuse sowie eine darin angeordnete Lagerschale zumeist aus einem Polymerwerkstoff auf. Zur Fixierung der Lagerschale im Gehäuse wird zumeist ein axial stirnseitiger Bereich des Gehäuses dergestalt umgeformt, dass Lagerschale und Kugel im Gelenkgehäuse unter einer gewissen Vorspannung verpresst bzw. eingeschlossen werden.

Andere bekannte Bauweisen gattungsgemäßer Kugelgelenke besitzen ebenfalls ein einteiliges Gelenkgehäuse, wobei im Gelenkgehäuse eine zweiteilige Lagerschale angeordnet ist, die ebenfalls üblicherweise aus Kunststoff besteht. Der Verschluss des Gelenkgehäuses bzw. die Fixierung der Lagerschale im Gehäuse erfolgt dabei in ähnlicher Weise wie bei den bekannten Kugelgelenken mit einteiliger Lagerschale.

Bei derartigen bekannten Kugelgelenken tritt jedoch in der Fertigung das Problem auf, dass beim Verschluss des Gehäuses, der wie beschrieben im allgemeinen durch Umformung eines Teilbereichs des Gelenkgehäuses erfolgt, die Lage der Kugelschale im Gelenkgehäuse sowie insbesondere die Vorspannungsverhältnisse zwischen Lagerschale und Gelenkkugel nicht optimal beherrschbar bzw. reproduzierbar sind.

Die Höhe der Vorspannungskräfte im Kugelgelenk - und die damit in Zusammenhang stehende, funktional wichtige Kenngröße des zur Bewegung der Gelenkkugel in der Kugelschale erforderlichen Kippmoments hängen bei den bekannten Kugelgelenken somit im Wesentlichen von der Sorgfalt des Umformprozesses ab. Ein entsprechend breites Streuband der Kippmomentwerte ist bei den aus dem Stand der Technik bekannten Kugelgelenken deshalb die Folge. Insbesondere bei anspruchsvollen Anwendungen werden derartige Toleranzen der Kippmomentwerte jedoch zunehmend nicht mehr akzeptiert.

Ein die Merkmale des Oberbegriffs des Anspruchs 1 aufweisendes Kugelgelenk mit geteiltem Gehäuse ist aus der Patentschrift FR 2691490 bekannt. Es dient jedoch nur zu Befestigungszwecken, bei denen kein Verschleiss auftritt.

Mit diesem Hintergrund ist es Aufgabe der vorliegenden Erfindung, ein Kugelgelenk zu schaffen, mit dem sich die genannten Nachteile des Standes der Technik überwinden lassen. Insbesondere soll das Kugelgelenk auf fertigungstechnisch zuverlässig beherrschbare Weise geringstmögliche Toleranzen und einen Verschleißausgleich für eine Abnutzung der Lagerflächen bereitstellen.

Diese Aufgabe wird durch ein Kugelgelenk mit den Merkmalen des Patentanspruchs 1 gelöst. Bevorzugte Ausführungsformen sind Gegenstand der Unteransprüche.

Das erfindungsgemäße Kugelgelenk umfasst zunächst einmal in an sich bekannter Weise ein Gelenkgehäuse mit einem zumeist im Wesentlichen topf- oder zylinderförmigen Innenraum, wobei im Innenraum des Gelenkgehäuses die Gelenkkugel des Kugelgelenks gleitbeweglich aufgenommen ist, wobei sich das Kugelgelenk jedoch dadurch auszeichnet, dass das Gelenkgehäuse - bezogen auf die Längsachse des Kugelzapfens in seiner Neutralstellung - aus einer kugelzapfenseitigen sowie aus einer gehäusedeckelseitigen Gehäusehälfte besteht. Dabei sind die beiden Gehäusehälften mittels jeweils eines im Wesentlichen ringförmig umlaufenden Anschlags in der gelenkgehäuseaxialen Richtung exakt definiert aneinander zur Anlage bringbar. Der Begriff "Gehäusehälften" soll hierbei lediglich sinngemäß dafür stehen, dass das Gelenkgehäuse in der beanspruchten charakteristischen Weise zweiteilig ausgeführt ist, wobei die "Gehäusehälften" keineswegs dieselbe Größe oder Form aufweisen müssen.

Mit anderen Worten bedeutet dies, dass bei der Montage des erfindungsgemäßen Kugelgelenks aufgrund der an den beiden Gehäusehälften jeweils angeordneten, zueinander formkorrespondierenden Anschläge stets eine absolut exakte relative Positionierung der beiden Gehäusehälften in der gelenkgehäuseaxialen Richtung erfolgt. Im Unterschied zum Stand der Technik ist damit jedoch auch ein stets exakt gleiches Innenvolumen des Gelenkgehäuses gewährleistet, was wiederum zu exakt reproduzierbaren Vorspannungsverhältnissen zwischen Gelenkgehäuse und Gelenkkugel führt.

Gemäß der Erfindung bilden beide Gehäusehälften, gleichzeitig jeweils unmittelbar einen Teil der Lagerschale für die Gelenkkugel, wobei eine der Gehäusehälfen die andere umgreift. Dies bedeutet mit anderen Worten, dass eine oder beide Hälften des Gelenkgehäuses - ohne eigens zwischengeschaltete Lagerschale - auf ihrer Innenseite gleichzeitig die Lageroberfläche für die Gelenkkugel darstellen.

Damit entfällt zunächst einmal die Notwendigkeit, zusätzlich eine separate Lagerschale vorsehen zu müssen, wodurch bereits Aufwand und entsprechende Kosten eingespart werden können. Weiterhin lassen sich auf diese Weise noch weiter verringerte Toleranzen bei den Maßen sowie insbesondere bei den damit in Zusammenhang stehenden Vorspannungskräften und Kippmomenten des Kugelgelenks erzielen.

Da somit zwischen Gelenkkugel und Gelenkgehäuse keine zusätzliche Lagerschale mehr erforderlich ist, die nach dem Stand der Technik - auch wegen der dort gegebenen Notwendigkeit des Toleranzausgleichs - zumeist aus einem verhältnismäßig gering belastbaren Polymermaterial besteht, kann ferner auch die zulässige Flächenpressung zwischen der metallischen Paarung aus Gelenkkugel und Gelenkgehäuse wesentlich erhöht werden. Hieraus lässt sich entweder eine Verlängerung der Lebensdauer, eine Erhöhung der Belastbarkeit bei gleichen Abmessungen, oder aber eine Verringerung der Maße und des Gewichts des Kugelgelenks ableiten. All dies kommt einer Verbesserung des Kosten-Nutzen-Verhältnisses des Kugelgelenks vorteilhaft zugute.

Auch die beim Stand der Technik häufig auftretenden Probleme mit der korrekten Fixierung der Lagerschale im Kugelgelenk bei gleichzeitiger Einhaltung der vorgesehenen Vorspannungskräfte zwischen Lagerschale und Gelenkkugel werden durch ein Kugelgelenk, bei dem die Gehäusehälften gleichzeitig unmittelbar die Lagerschale darstellen, vollständig beseitigt.

Gemäß einer weiteren, besonders bevorzugten Ausführungsform der Erfindung weist der Gelenkgehäuseinnenraum eine ringförmig umlaufende Ausnehmung auf. Dabei ist in der umlaufenden Ausnehmung ein Ringelement aus elastischem Polymermaterial angeordnet, wobei das Ringelement vorzugsweise unter einer definierten Vorspannung steht.

Auf diese Weise lässt sich eine besonders exakte Definition der gewünschten Vorspannung und des gewünschten Reib- bzw. Kippmoments des Kugelgelenks erreichen. Ebenso lassen sich auf diese Weise bei einem Kugelgelenk exakt spezifizierbare Werte für die Stoß- bzw. Schwingungsdämpfung einstellen, zusätzlich kann das Ringelement als Verschleißausgleich für die zu erwartende Abnutzung der Lageroberflächen von Gelenkkugel bzw. Gelenkgehäuse herangezogen werden.

Vorzugsweise besitzen die Gehäusehälften ferner auch jeweils einen ebenfalls im Wesentlichen umlaufenden Radialanschlag. Die beiden zueinander formkorrespondierenden Radialanschläge sorgen dabei dafür, dass die Gehäusehälften auch in radialer Richtung exakt definiert und zentriert aneinander anliegen.

Besonders bevorzugt weist die die Lagerschale bildende Gehäusehälfte, bzw. die die beiden Lagerschalen bildenden Gehäusehälften, im Bereich ihrer Kontaktflächen mit der Gelenkkugel eine Oberflächenhärtung auf. Aufgrund der Oberflächenhärtung, die vorzugsweise in Form einer Induktivhärtung ausgebildet ist, lassen sich die zulässigen Flächenpressungen zwischen Gelenkgehäuse und Gelenkkugel noch weiter erheblich steigern. Somit kann das Kugelgelenk bei gleicher Belastbarkeit weiter verkleinert werden, oder es kann bei unveränderten Abmessungen die Nennlast des Kugelgelenks erhöht werden. Zudem lassen sich auf diese Weise weiter verringerte Reibwerte, eine weiter verringerte Streubreite beim Kippmoment des Kugelgelenks sowie eine erhebliche Verlängerung der Lebensdauer des Kugelgelenks erzielen.

Die Erfindung wird zunächst einmal unabhängig davon verwirklicht, auf welche Weise konstruktiv die Verbindung der beiden Gehäusehälften erfolgt, solange der zuverlässige Zusammenhalt der Gehäusehälften bei den im Betrieb des Kugelgelenks zu erwartenden Belastungen gewährleistet ist.

Gemäß einer bevorzugten Ausführungsform der Erfindung ist jedoch vorgesehen, dass die beiden Gehäusehälften eine korrespondierende Paarung aus einem Innengewinde und einem Außengewinde aufweisen. Auf diese Weise kann eine einfache, genaue und zuverlässige Montage der beiden Gehäusehälften mittels Verschraubung erfolgen, nachdem die Gelenkkugel in dem durch die beiden Gehäusehälften gebildeten Innenraum angeordnet ist. Vorzugsweise sind dabei an beiden Gehäusehälften Schlüsselflächen angeordnet, über die das zur Verschraubung erforderliche Drehmoment auf die Gehäusehälften übertragen werden kann.

Nach einer alternativen Ausführungsform der Erfindung weist eine der Gehäusehälften einen im Wesentlichen umlaufenden Hinterschnitt auf. Die andere Gehäusehälfte besitzt im Zusammenbau des Kugelgelenks einen ebenfalls im Wesentlichen umlaufenden Vorsprung. Dabei wird am fertig zusammengebauten Kugelgelenk der Hinterschnitt der ersten Gehäusehälfte formschlüssig von dem Vorsprung der zweiten Gehäusehälfte dergestalt hintergriffen, dass die beiden umlaufenden Anschläge der Gehäusehälften fest aufeinander gepresst werden.

Der umlaufende Vorsprung kann dabei beispielsweise mittels Verpressen, Stirnwalzen oder Verrollen der Stirnseite einer Gehäusehälfte erzeugt sein.

Auf diese Weise lässt sich die Verbindung zwischen den beiden Gehäusehälften besonders schnell und damit kostengünstig herstellen, während gleichzeitig dank der erfindungsgemäßen Anschläge der beiden Gehäusehälften nach wie vor eine gegenseitig exakte Positionierung der Gehäusehälften gewährleistet ist.

Nach einer weiteren, ebenfalls besonders bevorzugten Ausführungsform ist das Kugelgelenk ein Axialgelenk. Dabei ist vorzugsweise die deckelseitige Gehäusehälfte - also die der Zapfenöffnung abgewandte Gehäusehälfte des Gelenkgehäuses - einstückig mit einem Verbindungselement ausgebildet. Bei dem Verbindungselement kann es sich dabei insbesondere, jedoch keineswegs ausschließlich, um ein einstückig angeformtes Muttergewinde bzw. um einen einstückig angeformten Gewindebolzen handeln. Auf diese Weise wird das Kugelgelenk als Axialgelenk mit einer besonders geringen Anzahl an Bauteilen verwirklicht, was wiederum einer kostengünstigen Produktion und Montage sowie dem zuverlässigen Betrieb des Kugelgelenks zugutekommt.

Im Folgenden wird die Erfindung anhand lediglich Ausführungsbeispiele darstellender Zeichnungen näher erläutert. Dabei zeigt:
- **Fig. 1**: in schematischer, teilweise geschnittener Darstellung eine Ausführungsform eines Kugelgelenks gemäß der Erfindung;
- **Fig. 2**: in einer **Fig. 1** entsprechenden Darstellung eine weitere Ausführungsform eines erfindungsgemäßen Kugelgelenks;
- **Fig. 3**: in einer **Fig. 1** und **2** entsprechenden Darstellung eine dritte Ausführungsform eines erfindungsgemäßen Kugelgelenks; und
- **Fig. 4**: in einer **Fig. 1** bis **3** entsprechenden Darstellung eine vierte Ausführungsform eines erfindungsgemäßen Kugelgelenks.

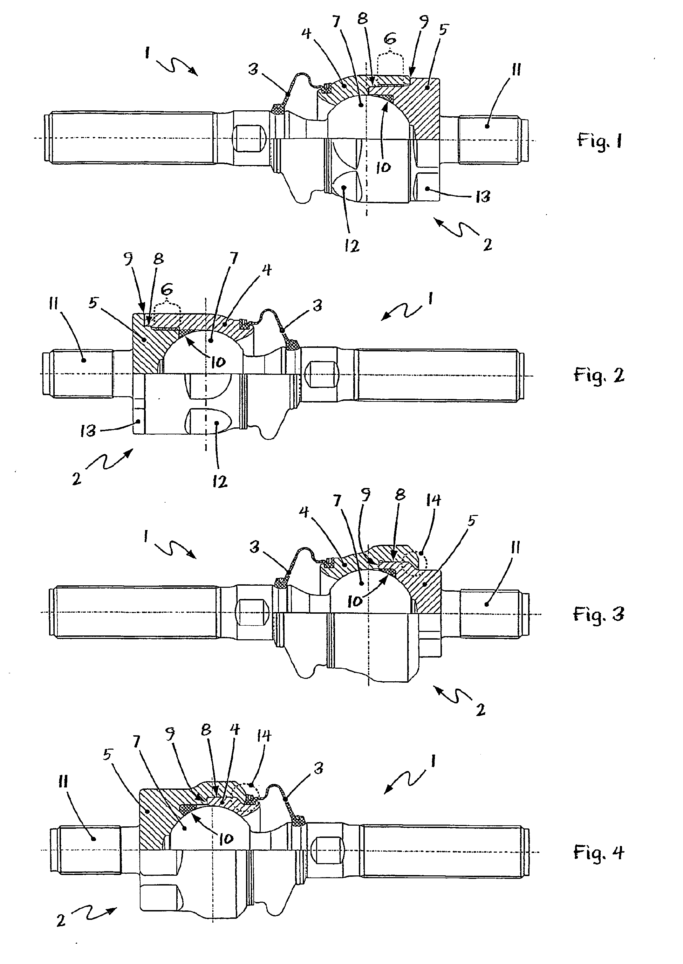

**Fig. 1** zeigt in schematischer, teilweise geschnittener Darstellung im Längsschnitt eine erste Ausführungsform eines Kugelgelenks gemäß der vorliegenden Erfindung.

Man erkennt zunächst, dass es sich bei dem Kugelgelenk gemäß **Fig. 1** um ein Axialgelenk handelt, das einen Kugelzapfen 1 sowie ein Gelenkgehäuse 2 und ferner einen Dichtungsbalg 3 aufweist. Dabei ist das Gelenkgehäuse 2 jedoch zweiteilig ausgebildet und umfasst die beiden Gehäusehälften 4 und 5.

Die beiden Gehäusehälften 4 und 5 sind mittels eines Gewindes 6 miteinander verschraubt und bilden auf diese Weise nicht nur das Gelenkgehäuse selbst, sondern auch gleichzeitig die eigentliche Lageroberfläche für die Gelenkkugel 7. Eine exakte und reproduzierbare relative Positionierung der beiden Gehäusehälften 4 und 5 wird durch einen Radialanschlag bei 8 sowie einen Axialanschlag bzw. eine axiale Zentrierung mittels Passung bei 9 gewährleistet.

Das Kugelgelenk umfasst ferner ein beim vorliegenden Ausführungsbeispiel aus einem Elastomerwerkstoff gefertigtes elastisches Ringelement 10, das unter einer definierten Vorspannung in einer umlaufenden Ringnut der Gehäusehälfte 5 angeordnet ist. Dank des Ringelements 10 lässt sich die gewünschte Vorspannung des Kugelgelenks und das vorgesehene Reib- bzw. Kippmoment bei der Bewegung des Kugelgelenks konstruktiv besonders exakt sowie mit höchster Reproduzierbarkeit festlegen.

Ebenso können auf diese Weise die vorgesehenen Werte für eine Stoß- bzw. Schwingungsdämpfung des Kugelgelenks exakt spezifiziert bzw. eingestellt werden, und ferner kann das Ringelement zum Ausgleich des Verschleißes aufgrund der mit der Zeit eintretenden Abnutzung der Lageroberflächen von Gelenkkugel und Gelenkgehäuse herangezogen werden.

In **Fig. 1** erkennt man ferner, dass die zeichnungsbezogen rechte Gehäusehälfte 5 einen einstückig angeformten Gewindebolzen 11 aufweist, durch den sich das dargestellte Axialgelenk zuverlässig mit angrenzenden Bauteilen verbinden lässt. Schließlich ist erkennbar, dass beide Gehäusehälften 4 und 5 mit Schlüsselflächen 12, 13 versehen sind, die der einfachen und zuverlässigen Einleitung des zum Verschrauben der beiden Gehäusehälften 4 und 5 erforderlichen Drehmoments bei der Montage des Kugelgelenks dienen.

Das Kugelgelenk gemäß **Fig. 2** unterscheidet sich von der Ausführungsform gemäß **Fig. 1** im Wesentlichen lediglich durch die Lage von Radialanschlag 8 und Ringnut bzw. Ringelement 10. Im Unterschied zu **Fig.1** ist der Radialanschlag 8 bei dem Kugelgelenk gemäß **Fig. 2** im axialen Endbereich der Gehäusehälfte 4 angeordnet. Die Ringnut zur Aufnahme des elastischen Ringelements 10, die bei dem Kugelgelenk gemäß **Fig. 1** durch eine Ausnehmung in der Gehäusehälfte 5 gebildet wird, entsteht bei dem Kugelgelenk gemäß Fig. 2 erst durch das Zusammenwirken beider Gehäusehälften 4 und 5.

Eine weitere Ausführungsform eines erfindungsgemäßen Kugelgelenks, wiederum in Form eines Axialgelenks, ist in **Fig. 3** dargestellt. Der wesentliche Unterschied zwischen den Ausführungsformen gemäß **Fig. 1** und 2 und der Ausführungsform gemäß **Fig. 3** besteht darin, dass die Verbindung der beiden Gehäusehälften 4 und 5 bei dem Kugelgelenk gemäß **Fig. 3** nicht mittels einer Verschraubung, sondern durch plastische Verformung der zapfenseitigen Gehäusehälfte 4 erfolgt.

Die Verformung, die beispielsweise mittels Verpressen oder Stirnwalzen erzeugt werden kann, erfolgt dabei in dem mit Bezugsziffer 14 bezeichneten stirnseitigen Bereich der zapfenseitigen Gehäusehälfte 4. Durch diese Umformung wird im Bereich der Stirnseite der Gehäusehälfte 4 ein ringförmig umlaufender Vorsprung erzeugt, der einen ebenfalls umlaufenden Hinterschnitt der Gehäusehälfte 5 bei Bezugsziffer 14 formschlüssig dergestalt hintergreift, dass die beiden Gehäusehälften 4 und 5 unlösbar miteinander verbunden sind. Dabei werden sowohl die Axialanschläge 9 als auch die Radialanschläge bzw. Passungen 8 der beiden Gehäusehälften 4 und 5 fest aufeinander gepresst, so dass eine exakt definierte Relativposition der beiden Gehäusehälften 4 und 5 gewährleistet ist.

**Fig. 4** schließlich zeigt eine vierte Ausführungsform eines erfindungsgemäßen Kugelgelenks, das ebenfalls wieder als Axialgelenk ausgebildet ist. Das Axialgelenk gemäß **Fig. 4** entspricht in seinen wesentlichen Merkmalen dem Axialgelenk gemäß **Fig. 3****,** unterscheidet sich von diesem jedoch dadurch, dass bei Bezugsziffer 14 nicht - wie bei dem Axialgelenk gemäß **Fig. 3** - die zapfenseitige Gehäusehälfte 4 die deckelseitige Gehäusehälfte 5 umgreift, sondern dass hier vielmehr umgekehrt die zapfenseitige Gehäusehälfte 4 von der deckelseitigen Gehäusehälfte 5 umgriffen wird. Die Verpressung 14 erfolgt bei dem Axialgelenk gemäß **Fig. 4** demgemäß nicht durch Umformung der zapfenseitigen Gehäusehälfte 4, sondern vielmehr durch Umformung der deckelseitigen Gehäusehälfte 5, wobei letztere wiederum unmittelbar den Gewindebolzen 11 zur zuverlässigen Verbindung mit angrenzenden Bauteilen trägt.

Das Kugelgelenk gemäß **Fig. 4** lässt sich besonders kompakt und robust ausführen, ferner ergeben sich zusätzlich noch konstruktive Vereinfachungen und damit potentielle Kosteneinsparungen insbesondere bezüglich der Gestaltung der gehäuseseitigen Befestigungsnut für, den Dichtungsbalg 3.

Im Ergebnis wird somit deutlich, dass dank der Erfindung ein Kugelgelenk geschaffen wird, das fertigungstechnisch besonders leicht beherrschbar und damit bei gleichbleibend hoher Qualität gleichzeitig kostengünstig produzierbar ist. Das erfindungsgemäße Kugelgelenk zeichnet sich zudem durch erhebliches Potenzial zur Erhöhung der spezifischen Tragfähigkeit bzw. wahlweise zur Verringerung der Abmessungen aus. Mit dem erfindungsgemäßen Kugelgelenk lassen sich somit die steigenden Qualitätsanforderungen des Marktes erfüllen, ohne dass damit nennenswerte Kostensteigerungen in der Produktion verbunden wären.

Die Erfindung leistet damit einen wichtigen Beitrag zur qualitativen Verbesserung von Kugelgelenken und zeigt ihr Potential insbesondere in der Anwendung von Kugelgelenken als Führungsgelenke im Bereich anspruchsvoller Achs- und Lenksysteme sowie Radaufhängungen am Kraftfahrzeug.

### Bezugszeichenliste

- 1: Kugelzapfen
- 2: Gelenkgehäuse
- 3: Dichtungsbalg
- 4, 5: Gehäusehälfte
- 6: Gewinde
- 7: Gelenkkugel
- 8: Radialanschlag, Passung
- 9: Axialanschlag
- 10: elastisches Ringelement
- 11: Gewindebolzen
- 12, 13: Schlüsselflächen
- 14: Verpressung, umlaufender Vorsprung

## Patentansprüche

1. Kugelgelenk, beispielsweise für ein Achssystem eines Kraftfahrzeugs, das Kugelgelenk umfassend ein im Wesentlichen ring- oder topfförmiges Gelenkgehäuse (2), in dessen Innenraum die Kugel (7) eines Kugelzapfens (1) gleitbeweglich aufgenommen ist,
wobei das Gelenkgehäuse (2) aus einer kugelzapfenseitigen und aus einer gehäusedeckelseitigen Gehäusehälfte (4, 5) besteht, wobei die beiden Gehäusehälften (4, 5) jeweils einen im Wesentlichen umlaufenden Axialanschlag (9) aufweisen, durch den die Gehäusehälften (4, 5) gelenkgehäuseaxial exakt definiert aneinander zur Anlage bringbar sind,
und wobei beide Gehäusehälften (4, 5) gleichzeitig jeweils unmittelbar einen Teil der Lagerschale für die Gelenkkugel (7) bilden und eine der Gehäusehälften (4) die andere der Gehäusehälften (5) umgreift,
**dadurch gekennzeichnet, dass**
der Gelenkgehäuseinnenraum eine ringförmig umlaufende Ausnehmung aufweist, in der ein unter einer definierten Vorspannung stehendes Ringelement (10) aus elastischem Polymermaterial angeordnet ist.

2. Kugelgelenk nach Anspruch 1,
**dadurch gekennzeichnet, dass** die Gehäusehälften (4, 5) jeweils einen im Wesentlichen umlaufenden Radialanschlag (8) aufweisen, durch den die Gehäusehälften (4, 5) in radialer Richtung exakt zentriert aneinander zur Anlage bringbar sind.

3. Kugelgelenk nach Anspruch 1 oder 2,
**dadurch gekennzeichnet, dass** die ringförmig umlaufende Ausnehmung eine in der gehäusedeckelseitigen Gehäusehälfte (5) angeordnete Ringnut ist.

4. Kugelgelenk nach Anspruch 1 oder 2,
**dadurch gekennzeichnet, dass** durch das Zusammenwirken beider Gehäusehälften (4, 5) eine Ringnut entsteht, die durch die in der gehäusedeckelseitigen Gehäusehälfte (5) angeordnete, ringförmig umlaufende Ausnehmung gebildet wird.

5. Kugelgelenk nach Anspruch 1 oder 2,
**dadurch gekennzeichnet, dass** die ringförmig umlaufende Ausnehmung eine Ringnut ist.

6. Kugelgelenk nach einem der Ansprüche 1 bis 5,
**dadurch gekennzeichnet, dass** die die Lagerschalen bildenden Gehäusehälften (4, 5) im Bereich ihrer Kontaktflächen mit der Gelenkkugel (7) eine Oberflächenhärtung aufweisen.

7. Kugelgelenk nach einem der Ansprüche 1 bis 6,
**dadurch gekennzeichnet, dass** die Gehäusehälften (4, 5) eine korrespondierende Paarung aus einem Innengewinde (6) und einem Außengewinde (6) aufweisen.

8. Kugelgelenk nach einem der Ansprüche 1 bis 7,
**dadurch gekennzeichnet, dass** die Gehäusehälften Schlüsselflächen (12, 13) aufweisen.

9. Kugelgelenk nach einem der Ansprüche 1 bis 6,
**dadurch gekennzeichnet, dass** eine der Gehäusehälften (4, 5) einen im Wesentlichen umlaufenden Hinterschnitt aufweist, wobei der Hinterschnitt formschlüssig von einem formkorrespondierenden, im Wesentlichen umlaufenden Vorsprung (14) der anderen Gehäusehälfte hintergriffen wird.

10. Kugelgelenk nach einem der Ansprüche 1 bis 9,
**dadurch gekennzeichnet, dass** das Kugelgelenk ein Axialgelenk ist.

11. Kugelgelenk nach Anspruch 10,
**dadurch gekennzeichnet, dass** die deckelseitige Gehäusehälfte (5) einstückig mit einem Verbindungselement (11) ausgebildet ist.

## Claims

1. Ball joint, for example for an axle system of a motor vehicle, the ball joint comprising a substantially annular or pot-shaped joint housing (2), in the interior of which the ball (7) of a ball pivot (1) is slidingly received,
wherein the joint housing (2) comprises a ball-pivot-side and a housing-lid-side housing half (4, 5), wherein the two housing halves (4, 5) each have a substantially circumferential axial stop (9), by means of which the housing halves (4, 5) may be brought into mutual abutment in an exactly defined manner axially of the joint housing, and wherein both housing halves (4, 5) simultaneously each directly form a part of the bearing shell for the joint ball (7) and one of the housing halves (4) engages around the other of the housing halves (5),
**characterized in that**
the joint housing interior has an annular circumferential recess, disposed in which is a ring element (10) of resilient polymer material that is under a defined initial tension.

2. Ball joint according to claim 1,
**characterized in that** the housing halves (4, 5) each have a substantially circumferential radial stop (8), by means of which the housing halves (4, 5) may be brought in radial direction into mutual abutment in an exactly centred manner.

3. Ball joint according to claim 1 or 2,
**characterized in that** the annular circumferential recess is an annular groove disposed in the housing-lid-side housing half (5).

4. Ball joint according to claim 1 or 2,
**characterized in that** the interaction of both housing halves (4, 5) gives rise to an annular groove that is formed by the annular circumferential recess disposed in the housing-lid-side housing half (5).

5. Ball joint according to claim 1 or 2,
**characterized in that** the annular circumferential recess is an annular groove.

6. Ball joint according to one of claims 1 to 5,
**characterized in that** the housing halves (4, 5) forming the bearing shells are surface-hardened in the region of their surfaces in contact with the joint ball (7).

7. Ball joint according to one of claims 1 to 6,
**characterized in that** the housing halves (4, 5) have a corresponding pairing of an internal thread (6) and an external thread (6).

8. Ball joint according to one of claims 1 to 7,
**characterized in that** the housing halves have spanner faces (12, 13).

9. Ball joint according to one of claims 1 to 6,
**characterized in that** one of the housing halves (4, 5) has a substantially circumferential undercut, wherein a correspondingly shaped, substantially circumferential projection (14) of the other housing half engages positively behind the undercut.

10. Ball joint according to one of claims 1 to 9,
**characterized in that** the ball joint is an axial joint.

11. Ball joint according to claim 10,
**characterized in that** the lid-side housing half (5) is constructed integrally with a connection element (11).

## Revendications

1. Joint à rotule, notamment pour un système d'essieu d'un véhicule automobile, le joint à rotule comprenant un boîtier d'articulation (2) sensiblement en forme d'anneau ou de pot, dans l'espace interne duquel la rotule (7) d'un pivot sphérique (1) est reçue à coulissement,
dans lequel le boîtier d'articulation (2) est constitué d'une moitié de boîtier côté pivot sphérique (4, 5) et d'une moitié de boîtier côté couvercle de boîtier (4, 5), dans lequel les deux moitiés de boîtier (4, 5) présentent respectivement une butée axiale (9) sensiblement périphérique, par laquelle les moitiés de boîtier (4, 5) peuvent être amenées en appui l'une contre l'autre de manière exactement définie par rapport à l'axe du boîtier d'articulation et dans lequel les deux moitiés de boîtier (4, 5) forment en même temps respectivement directement une partie de la coquille de coussinet pour le joint à rotule (7) et une des moitiés de boîtier (4) enveloppe l'autre des moitiés de boîtier (5),
**caractérisé en ce que**
l'espace interne du boîtier d'articulation présente une cavité périphérique en forme d'anneau, dans laquelle est agencé un élément annulaire (10) en matériau polymère élastique soumis à une précontrainte définie.

2. Joint à rotule selon la revendication 1,
**caractérisé en ce que**
les moitiés de boîtier (4, 5) présentent respectivement une butée radiale (8) sensiblement périphérique, par laquelle les moitiés de boîtier (4, 5) peuvent être amenées en appui l'une contre l'autre de manière exactement centrée dans la direction radiale.

3. Joint à rotule selon la revendication 1 ou 2,
**caractérisé en ce que**
la cavité périphérique en forme d'anneau est une rainure annulaire agencée dans la moitié de boîtier (5) côté couvercle de boîtier.

4. Joint à rotule selon la revendication 1 ou 2,
**caractérisé en ce que**,
par coopération des deux moitiés de boîtier (4, 5), il se forme une rainure annulaire qui est formée par la cavité périphérique en forme d'anneau ménagée dans la moitié de boîtier (5) côté couvercle de boîtier.

5. Joint à rotule selon la revendication 1 ou 2,
**caractérisé en ce que**
l'évidement périphérique en forme d'anneau est une rainure annulaire.

6. Joint à rotule selon l'une quelconque des revendications 1 à 5,
**caractérisé en ce que**
les moitiés de boîtier (4, 5) formant les coquilles de coussinet présentent un durcissement de surface dans la zone de leurs surfaces de contact avec le joint à rotule (7).

7. Joint à rotule selon l'une quelconque des revendications 1 à 6,
**caractérisé en ce que**
les moitiés de boîtier (4, 5) présentent un accouplement correspondant constitué d'un filet interne (6) et d'un filet externe (6).

8. Joint à rotule selon l'une quelconque des revendications 1 à 7,
**caractérisé en ce que**
les moitiés de boîtier présentent des surfaces de clavetage (12, 13).

9. Joint à rotule selon l'une quelconque des revendications 1 à 6,
**caractérisé en ce que**
l'une des moitiés de boîtier (4, 5) présente une contre-dépouille sensiblement périphérique, dans lequel la contre-dépouille est engagée par l'arrière par adaptation de forme par une saillie (14) de l'autre moitié de boîtier de forme correspondante sensiblement périphérique.

10. Joint à rotule selon l'une quelconque des revendications 1 à 9,
**caractérisé en ce que**
le joint à rotule est une articulation axiale.

11. Joint à rotule selon la revendication 10,
**caractérisé en ce que**
la moitié de boîtier (5) côté couvercle est réalisée d'un seul tenant avec un élément de raccordement (11).
